(19) Europäisches Patentamt / European Patent Office / Office européen des brevets

(11) **EP 1 452 889 B1**

(12) **FASCICULE DE BREVET EUROPEEN**

(45) Date de publication et mention
de la délivrance du brevet:
**14.03.2012 Bulletin 2012/11**

(51) Int Cl.:
**G01V 1/30** *(2006.01)*    **G01V 1/28** *(2006.01)*

(21) Numéro de dépôt: **04290160.3**

(22) Date de dépôt: **21.01.2004**

(54) **Méthode pour mesurer les similarités locales entre plusieurs cubes de traces sismiques**

Verfahren zur Messung lokaler Änlichkeiten zwischen mehreren Kuben die seismische Spuren enthalten

Method of measuring local similarities between several cubes containing seismic traces

(84) Etats contractants désignés:
**AT BE BG CH CY CZ DE DK EE ES FI FR GB GR HU IE IT LI LU MC NL PT RO SE SI SK TR**

(30) Priorité: **04.02.2003 FR 0301291**

(43) Date de publication de la demande:
**01.09.2004 Bulletin 2004/36**

(73) Titulaire: **Institut Français du Pétrole**
**92852 Rueil-Malmaison Cedex (FR)**

(72) Inventeurs:
• **Voutay, Olivier**
**75015 Paris (FR)**
• **Fournier, Frédérique**
**95240 Cormeilles en Parisis (FR)**
• **Royer, Jean-Jacques**
**54000 Nancy (FR)**

(56) Documents cités:
**WO-A1-03/003052    FR-A1- 2 808 336**

• **CHOPRA S ET AL: "FAULT INTERPRETATION-THE COHERENCE CUBE AND BEYOND" OIL AND GAS JOURNAL, PENNWELL PUBLISHING CO. TULSA, US, vol. 98, no. 31, 31 juillet 2000 (2000-07-31), pages 71-74, XP001008962 ISSN: 0030-1388**
• **CHOPRA S ET AL: "INTEGRATING COHERENCE CUBE IMAGING AND SEISMIC INVERSION" THE LEADING EDGE, SOCIETY OF EXPLORATION GEOPHYSICISTS, US, vol. 20, no. 4, avril 2001 (2001-04), page 354,356,360,362 XP001039192 ISSN: 1070-485X**
• **BAHORICH, M. AND FARMER, S.: "The coherence cube" THE LEADING EDGE, vol. 14, no. 10, octobre 1995 (1995-10), pages 1053-1058, XP002257906**
• **MARFURT K J ET AL: "3-D seismic attributes using a semblance-based coherency algorithm" GEOPHYSICS, SOCIETY OF EXPLORATION GEOPHYSICISTS. TULSA, US, vol. 63, no. 4, juillet 1998 (1998-07), pages 1150-1165, XP002195379 ISSN: 0016-8033**
• **ADAM GERSZTENKORN AND KURT J. MARFURT: "Eigenstructure-based coherence computations as an aid to 3-D structural and stratigraphic mapping" GEOPHYSICS, vol. 64, no. 5, septembre 1999 (1999-09) - octobre 1999 (1999-10), pages 1468-1479, XP002257907**

EP 1 452 889 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

# Description

La présente invention a trait à une méthode pour mesurer les similarités locales entre plusieurs cubes de traces sismiques 3D avant sommation obtenus d'un volume d'une zone souterraine, ou à la suite de campagnes de prospection répétitives (4D), par exemple. Il s'agit donc d'une mesure locale de cohérence qui traduit, en premier lieu, la ressemblance d'un cube sismique à l'autre, tout en prenant en compte la ressemblance locale au sein d'un même cube.

## ETAT DE LA TECHNIQUE

La notion de cohérence proprement dite est une notion relativement récente. La problématique, jusqu'à présent, a été de mettre au point un outil révélant les changements stratigraphiques ou structuraux (notamment les failles) à partir des mesures sismiques, et d'obtenir ainsi une information volumique sur ces changements. Le fondement de toutes les méthodes développées depuis moins de dix ans consiste à définir une dissimilarité locale de trace à trace.

Un premier algorithme décrit par: **Bahorich, M., and Farmer, S**. (1995), « The cohérence cube », *The Leading Edge,* **14**, 10, 1053-1058, consiste à calculer la corrélation croisée entre chaque trace d'un cube sismique avec ses deux voisines en ligne, avec ses deux voisines en CDP (couverture multiple), puis à combiner les deux résultats, après les avoir normalisés par l'énergie des traces. La cohérence n'est estimée qu'à partir de trois traces, ce qui rend le calcul très rapide mais aussi peu robuste si les données sont bruitées.

Suivant un autre algorithme décrit par **Marfurt, K. J., et al.** (1998), « 3-D Seismic Attributes Using a Semblance-based Coherency Algorithm », *Geophysics,* **63**, 1150-1165, le calcul de la cohérence est basé sur un calcul de semblance locale mettant en jeu davantage de traces, ce qui rend le résultat plus robuste au bruit.

Suivant un autre algorithme décrit par **Gersztenkorn, A., et Marfurt, K. J.** (1999), « Eigenstructure based Coherence Computations as an Aid to 3-D Structural and Stratigraphic Mapping ». *Geophysics,* **64,** 1468-1479, le calcul de la cohérence est basé sur une décomposition en valeurs propres : une fenêtre d'analyse définie en lignes, CDP et temps est extraite du cube sismique, la matrice de covariance des traces sismiques est constituée, et la plus grande valeur propre de cette matrice est calculée. La valeur de cohérence correspond alors au rapport entre cette valeur propre et la somme de toutes les valeurs propres de la matrice de covariance, ou trace de la matrice de covariance, qui n'est autre que la variance totale des traces sismiques de la fenêtre d'analyse.

Toutes ces approches présentent certaines limites. En particulier, une limitation majeure est qu'elles ne sont pas applicables à l'analyse de données sismiques multicubes.

En effet, le but de ces différents attributs de cohérence est plutôt de cartographier les anomalies stratigraphiques : ils ne permettent donc pas d'évaluer la cohérence soit calendaire (4D) soit AVO (pour "Amplitude Versus Offset"). Il n'existe, à ce jour, à notre connaissance, aucun algorithme permettant de déterminer de tels attributs.

L'Analyse en Composantes Principales Généralisée (ci-après ACPG) est un outil connu permettant de mettre en évidence une éventuelle redondance d'information entre des groupes d'attributs sismiques : elle peut être adaptée pour définir une mesure de ressemblance locale des données sismiques, et ce d'un cube à l'autre, en analysant un voisinage autour d'un point courant, la notion de groupe d'attributs étant reliée aux différentes campagnes dans le temps ou aux différentes campagnes sismiques avant sommation, par exemple.

Cette technique a été mise en oeuvre dans la méthode décrite dans la demande de brevet FR 02/11.200 du demandeur, pour compacter et filtrer des événements sismiques lus sur des traces sismiques "multicubes", avec répartition de ces événements en familles correspondant chacune à une signification physique particulière : cube de données iso déport ou iso angle d'incidence, cubes de paramètres élastiques issus d'une inversion stratigraphique jointe, etc. dans le but d'en extraire des informations sur la nature du sous-sol. Cette méthode comporte essentiellement la formation par combinaison des variables sismiques, de variables synthétiques en nombre très inférieur, que l'on obtient par construction d'une base vectorielle orthogonale dans chacun des ensembles d'analyse constitués par les données de chacune des familles, d'où découle la formation d'une base vectorielle orthonormée décrivant ces ensembles d'analyse, et l'utilisation de cette base vectorielle orthonormée (nouveaux attributs) pour filtrer et décrire les dits événements sismiques.

## LA METHODE SELON L'INVENTION

La méthode selon l'invention propose une mesure de la similarité locale entre plusieurs cubes de données sismiques 3D avant sommation ou sismiques 4D (répétées dans le temps). La méthode comporte les étapes suivantes :

a) en chaque point du volume étudié et caractérisé par plusieurs cubes sismiques, on extrait un voisinage volumique, centré sur ce point (point courant) et composé d'un ensemble de traces sismiques en nombre limité ; ainsi, chaque point courant est caractérisé par autant de groupes d'attributs sismiques qu'il y a de cubes analysés ;

b) on applique la technique d'analyse ACPG à ces groupes d'attributs sismiques extraits de chacun des cubes sismiques dans le voisinage volumique du point courant pour former des variables synthétiques ;

c) on détermine une valeur de cohérence à partir des variables synthétiques extraites, que l'on affecte au point courant ;

d) on réitère les étapes a) à c) pour chaque point ; et

e) on regroupe l'ensemble des valeurs de cohérence en un cube de cohérence.

Les valeurs comprises dans ce cube de cohérence donnent le degré de ressemblance locale recherché entre les cubes de données sismiques.

Les projections des variables synthétiques sur les différents cubes dans le voisinage du point courant représentent une part de l'information du groupe correspondant. Cette part d'information ou de variance est connue. Dès lors, plusieurs approches peuvent être envisagées pour le calcul de l'attribut de cohérence à partir des valeurs de corrélation calculées entre les variables synthétiques et leurs projections sur les cubes dans le voisinage du point courant.

Suivant un mode de mise en oeuvre, pour chaque point, on prend comme valeur de cohérence, la valeur moyenne des carrés des corrélations entre les variables synthétiques et leurs projections sur les cubes dans le voisinage du point courant, sur un nombre limité k des dites variables synthétiques.

La valeur de k est déterminée, par exemple, comme étant le plus petit nombre de variables synthétiques permettant d'atteindre un seuil de variance expliqué par les projections des variables synthétiques sur chacun des cubes, ce seuil étant préalablement choisi.

Suivant un autre mode de mise en oeuvre, on choisit un nombre de variables synthétiques selon leurs corrélations avec les groupes d'attributs associés au voisinage volumique du point courant. La valeur de cohérence attribuée au point courant est égale à la somme pondérée des carrés des corrélations entre les variables synthétiques considérées et leurs projections sur les cubes dans le voisinage du point courant.

Pour une valeur de corrélation, on choisit par exemple comme valeur de pondération, le pourcentage de variance expliqué par la projection de la variable synthétique sur le groupe correspondant divisé par la somme des variances de toutes les projections des variables synthétiques considérées sur le même groupe.

Suivant un autre mode de mise en oeuvre, on fixe un seuil sur le pourcentage de variance expliqué par les projections des variables synthétiques sur les cubes, dans le voisinage du point courant, qu'il faut prendre en compte. La valeur de cohérence est alors égale à la somme pondérée des carrés des corrélations entre les variables synthétiques et leurs projections sur les cubes dans le voisinage du point courant, de sorte que le nombre de variables synthétiques pris en compte permette d'atteindre ce seuil.

Pour une valeur de corrélation définie, on choisit par exemple une valeur de pondération égale à p (nombre de cubes) fois le seuil de variance fixé.

Selon les cas, le voisinage volumique peut être extrait de cubes de traces sismiques obtenus soit à l'issue d'une campagne sismique 3D, chacun correspondant à un même angle d'incidence ou à un même déport ou offset, soit à l'issue de campagnes d'exploration sismiques successives de la zone.

Le voisinage volumique peut être aussi extrait de cubes de résidus obtenus soit à l'issue d'une inversion stratigraphique avant sommation soit de cubes de résidus obtenus à l'issue d'une inversion stratigraphique après sommation. Il peut être aussi extraits des cubes inversés (avant ou après sommation) et des cubes de résidus.

La méthode est particulièrement avantageuse en ce qu'elle permet de définir un nouvel attribut mesurant une ressemblance locale entre plusieurs cubes sismiques extraits d'un voisinage autour d'un point. Elle permet de prendre en compte l'aspect multicube des données sismiques et mesure davantage la variabilité d'un cube sismique à l'autre que la variabilité au sein d'un même cube.

**PRESENTATION SUCCINCTE DES FIGURES**

- la figure 1 représente l'extraction des cubes sismiques pour l'analyse de cohérence, dans le voisinage d'un point courant ;

- la figure 2 montre les projections de la variable synthétique $Z^{(j)}$ sur les groupes 1 et k ;

- la figure 3 représente les cubes sismiques (a) (b) et (c) obtenus à la suite de trois campagnes sismiques répétées dans le temps et le cube de cohérence associé (premier mode de mise en oeuvre ou approche) - Fenêtre temporelle en dehors du réservoir ;

- la figure 4 montre des lignes extraites du cube de cohérence - (a) ligne 10, (b) ligne 20, (c) ligne 30, (d) ligne 40 ;

- la figure 5 montre un plan situé à 28ms sous le toit extrait des cubes des mêmes trois campagnes et du même cube de cohérence ;

- la figure 6 montre la ligne 10 extraite du cube de cohérence calculé selon le premier mode de mise en oeuvre avec un seuil à 99% (a), selon le troisième mode avec un seuil à 99% (b), à 90% (c), selon le deuxième mode de mise en oeuvre avec la première variable synthétique (d), les deux premières variables synthétiques (e) ;

- la figure 7 montre des exemples de distributions des différences d'amplitude entre deux campagnes sismiques ;

- la figure 8 montre les cubes sismiques associés aux trois campagnes successives et le cube de cohérence associé, dans une fenêtre temporelle au niveau du réservoir ;

- la figure 9 montre les plans temporels extraits du cube de cohérence calculé sur le réservoir ;

- la figure 10 montre le plan temporel situé 12ms sous le toit d'un réservoir et l'attribut de cohérence calculé avec la première variable synthétique (a), les deux premières variables synthétiques (b), avec un seuil de variance à 90% (c), à 95% (d), à 99% (e) ;

- la figure 11 montre une vue 3D du cube de cohérence obtenue avec les deux premières variables synthétiques (seconde approche) - valeurs de cohérence inférieures strictement à 0,8;

- la figure 12 montre les cubes sismiques iso-angles 0°-6°, 12°-18°, 24°-30° et le cube de cohérence associé ;

- la figure 13 montre trois plans temporels situés (a) 4ms, (b) 10ms, (c) 16ms, sous le toit du réservoir et extraits du cube de cohérence ; et

- la figure 14 montre une ligne passant par un puits W2 extraite des cubes sismiques 0°-6°, 12°-18°, 24°-30° et du cube de cohérence.

**DESCRIPTION DETAILLEE**

La notion de cohérence jusqu'ici a été surtout appliquée à la recherche d'anomalies stratigraphiques et les valeurs de cohérence calculées à partir d'un seul cube de données sismiques, habituellement le cube après sommation ou "stack".

Avec la méthode que l'on va décrire ci-après, on forme un cube de cohérence à partir de plusieurs cubes de données sismiques 3D (AVO ou 4D), indiquant en tout point le degré de ressemblance ou de dissimilarité locale des données sismiques, cube à cube, sur un voisinage volumique autour d'un point courant, et permettant donc d'imager ce qui change ou ce qui ne change pas d'un cube à l'autre.

Comme on l'a rappelé, l'ACPG est une technique permettant de mettre en évidence ce qui est commun et ce qui est différent entre p groupes de variables ou d'attributs sismiques, et de déterminer rapidement si tous les groupes sont linéairement identiques. Dans le cas du calcul d'un cube de cohérence, il s'agit de réaliser une mesure locale de la ressemblance (ou dissemblance) d'un cube sismique à l'autre, tout en prenant aussi en compte la ressemblance locale autour du point courant au sein d'un même cube.

Considérons p cubes de traces sismiques. Ces cubes de traces peuvent correspondre, par exemple, à des campagnes sismiques après sommation, répétées dans le temps sur une même zone géographique (cubes sismiques 4D), ou bien à des cubes sismiques 3D avant sommation iso angle ou iso-"offsets" (déports).

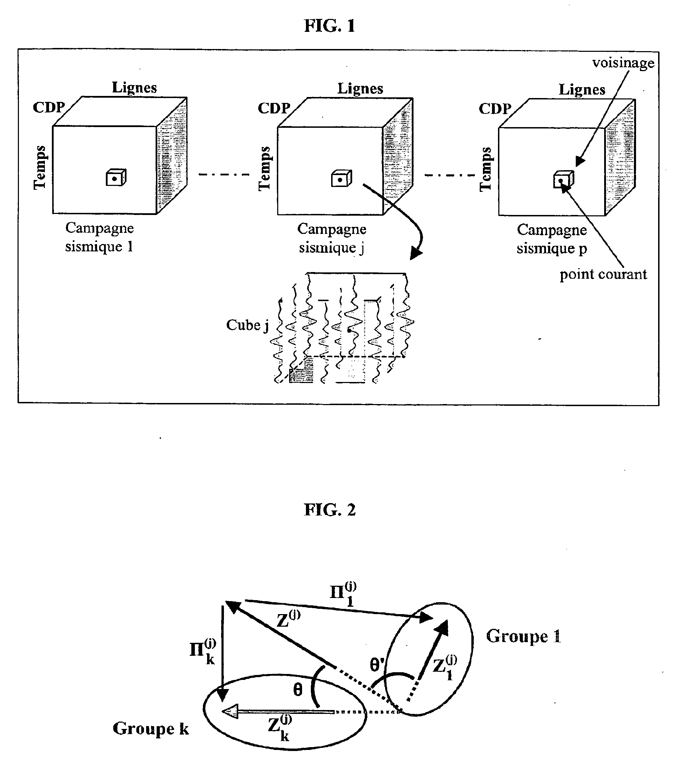

Un voisinage volumique, centré sur une coordonnée (Ligne ; CDP (couverture multiple) ; temps ou profondeur) et composé d'un nombre limité de traces, est extrait de chacun des p cubes sismiques (figure 1). Le nombre de traces composant ce voisinage sera discuté plus loin. On dispose ainsi de p ensembles de traces de même dimension centrés sur un point de mêmes coordonnées géographiques, et correspondant aux p cubes sismiques initiaux.

Une ACPG est réalisée sur les p ensembles ainsi extraits. Chaque ensemble ainsi extrait dans le voisinage du point courant correspond à un groupe d'attributs sismiques initiaux, ces attributs étant simplement, par exemple, les séries des valeurs d'amplitudes correspondant aux différentes valeurs de la trace dans la fenêtre temporelle étudiée. Le nombre total d'attributs est donc égal à p fois la dimension verticale du voisinage considéré.

On calcule alors le carré de la corrélation entre la variable synthétique $Z^{(j)}$ et sa projection sur un groupe d'attributs (figure 2). Le carré de la corrélation correspond, en fait, au cosinus carré de l'angle $\theta$ entre les deux vecteurs représentant respectivement la variable synthétique et sa projection. Il donne une indication sur le degré de proximité entre ces deux vecteurs, et donc entre la variable synthétique $Z^{(j)}$ et le groupe correspondant : une valeur de 1 indiquera que la variable synthétique et sa projection sont confondues, alors qu'une valeur éloignée de 1 donnera une indication sur leur éloignement.

Ainsi, lorsque tous les groupes d'attributs se ressemblent, les cosinus carrés des angles entre tous les $Z^{(j)}$ et leurs projections sont égaux à 1. Dans le cas contraire où la ressemblance est faible, les carrés des corrélations sont plus ou moins éloignés de 1 pour un certain nombre de $Z^{(j)}$; ils sont d'autant plus éloignés, pour nombre d'entre eux, que les groupes d'attributs seront différents.

Or, les projections de chacun des $Z^{(j)}$ sur les différents groupes représentent une part de l'information du groupe correspondant. Cette part de variance peut être connue et calculée. Dès lors, plusieurs approches peuvent être envisagées pour le calcul de l'attribut de cohérence à partir de ces valeurs de corrélation.

**Première approche**

Une première approche, simple, consiste à calculer la valeur moyenne des carrés des corrélations sur un nombre k de $Z^{(j)}$ (k ≤ p). Le nombre k est choisi de la façon suivante :

(i) un seuil S sur la variance cumulée est fixé, par exemple 90% ;

(ii) k est alors déterminé comme étant le plus petit nombre de variables synthétiques $Z^{(j)}$ permettant d'atteindre ce seuil.

Dans ce cas, le nombre de variables synthétiques considérées dans le calcul des corrélations est identique pour chaque groupe et le poids attribué à chaque corrélation est le même.

$$c = \frac{1}{p \times k} \sum_{i=1}^{p} \sum_{j=1}^{k} \rho^2(Z^{(j)}, Z_i^{(j)})$$

**Seconde approche**

Une seconde approche consiste à choisir le nombre de variables synthétiques $Z^{(j)}$ selon leur corrélation avec les groupes : en général, les premières variables suffisent puisque, par principe, elles représentent la partie de l'information commune aux groupes.

Une fois ce nombre fixé, et à la différence de la première approche, la somme, pondérée par les variances, des carrés des corrélations entre les $Z^{(j)}$ considérés et leurs projections sur les groupes est calculée. Les carrés des corrélations entre un vecteur $Z^{(j)}$ et ses projections sur les différents groupes peuvent en effet être tous égaux à 1, alors que la part de variance expliquée est faible.

Pondérer par la variance permet alors de prendre en compte la capacité de compaction des variables synthétiques extraites de l'ACPG dans le calcul de la cohérence, et d'éviter d'attribuer une valeur trop forte si, en réalité, les cubes de traces étudiés ne se ressemblent que pour une faible part. Dans ce cas, le poids $p_{i,j}$ affecté à chaque corrélation est égal à la variance expliquée par la projection de la variable synthétique $Z^{(j)}$ sur le groupe i correspondant, divisée par la somme de toutes les variances. Cette « normalisation » assure que la somme des poids est bien égale à 1.

$$c = \sum_{i=1}^{p} \sum_{j=1}^{k} p_{i,j} \times \rho^2(Z^{(j)}, Z_i^{(j)})$$

Outre la différence de pondération avec la première approche, il est à noter que la part de variance prise en compte dans chacun des groupes peut être différente.

**Troisième approche**

Enfin, une troisième approche consiste, comme dans la première méthode, à fixer un seuil sur la part de variance totale expliquée à prendre en compte. Mais cette fois-ci, pour chaque groupe i, le nombre $k_i$ de variables synthétiques $Z^{(j)}$ considérées sera strictement le nombre permettant d'atteindre le seuil. Ainsi, ce nombre peut différer d'un groupe à l'autre. La corrélation « moyenne » sera estimée avec l'ensemble des corrélations élémentaires des variables synthétiques nécessaires pour chaque groupe.

$$c = \sum_{i=1}^{p} \sum_{j=1}^{k_i} p_{i,j} \times \rho^2(Z^{(j)}, Z_i^{(j)})$$

Le poids $p_{i,j}$ donné à chaque corrélation est alors égal à la variance expliquée par la projection de la variable synthétique $Z^{(j)}$ sur le groupe i divisé par p fois le seuil de variance choisi. Cette « normalisation » permet ainsi d'avoir une somme des poids égale à 1.

Deux paramètres caractérisant la taille du voisinage d'analyse autour du point courant sont à déterminer : le nombre de traces du voisinage et la dimension verticale (en temps ou en profondeur) des traces. Si un petit nombre de traces est pris en compte, par exemple neuf traces par voisinage, le résultat apparaîtra spatialement plus bruité que si chaque voisinage est constitué de davantage de traces, par exemple 25. D'autre part, plus la dimension verticale sera importante, plus on peut s'attendre à ce que le résultat en cohérence soit lissé verticalement. De plus, la variabilité pouvant augmenter, le seuil de variance à fixer dans le calcul de l'attribut de cohérence selon la troisième méthode sera différent en fonction de la dimension verticale de la fenêtre d'analyse. De même, on peut s'attendre à ce que la capacité de compaction des variables synthétiques soit d'autant plus forte que la dimension de la fenêtre est petite.

**EXEMPLES D'APPLICATION**

**1 - Application à des données sismiques 4D**

La sismique répétée consiste à réaliser plusieurs campagnes sismiques sur une même zone géographique afin d'analyser et d'imager les changements pouvant intervenir au sein d'un réservoir après sa mise en production. Calculer un attribut de cohérence sur des données 4D a deux objectifs :

1. indiquer plus précisément la reproductibilité du signal sismique en dehors du réservoir et contrôler ainsi le processus d'homogénéisation des amplitudes sismiques;

2. indiquer où et dans quelle mesure la réponse sismique varie au sein du réservoir et donc aider à l'interprétation de ces changements.

On a utilisé les traces sismiques de trois cubes après sommation correspondant à trois campagnes sismiques 3D, desquels ont été extraits trois cubes de 60 ms d'épaisseur chacun, situés environ 70ms au-dessus du réservoir, et trois cubes de 20 ms d'épaisseur situés au niveau du réservoir.

L'analyse des cubes en dehors du réservoir a pour but d'étudier dans quelle mesure le signal sismique se répète d'une campagne à l'autre, alors que l'analyse des cubes sismiques situés au niveau du réservoir permet d'étudier les variations de la sismique au cours du temps induites par l'exploitation du réservoir.

**1-1 En dehors du réservoir**

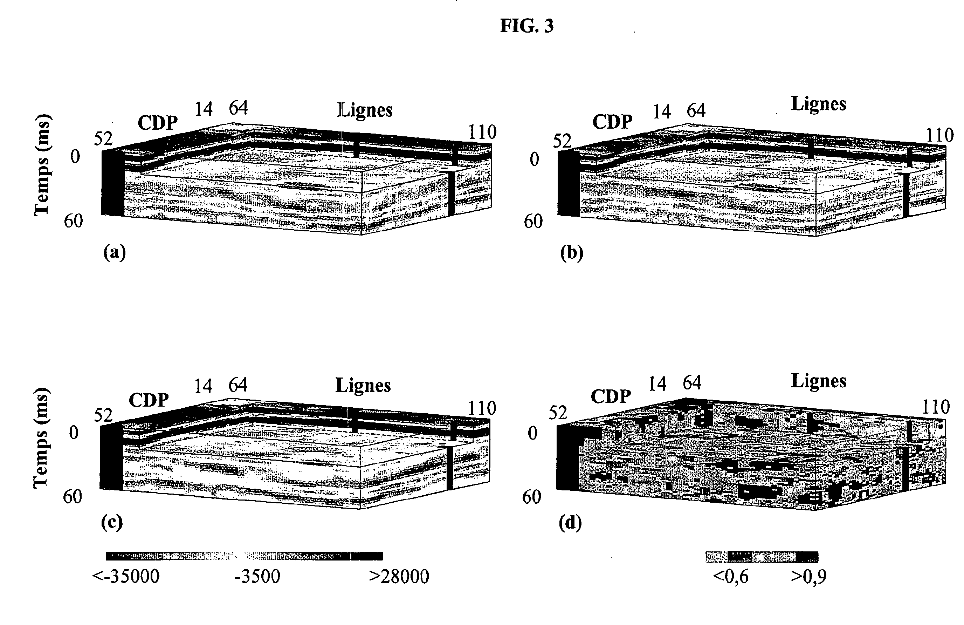

Un attribut de cohérence a tout d'abord été calculé selon la première méthode de calcul sur une partie située largement au-dessus du réservoir (70ms) afin que les enregistrements sismiques ne soient pas influencés par l'exploitation du réservoir. Le seuil de variance a été fixé à 99%, permettant ainsi de prendre en compte la quasi-totalité de l'information expliquée par les variables synthétiques extraites de l'ACPG, mais aussi de ne pas prendre en compte des variables synthétiques expliquant une trop faible part de la variance. La taille du voisinage du point courant utilisé pour le calcul de la cohérence est de 25 traces (un cube de 5 traces de côté centré au point courant) de 4ms chacune. La figure 3 montre les trois cubes sismiques correspondant aux trois campagnes, ainsi que le cube de cohérence associé. Contrairement à ce qui pouvait être attendu, ce dernier montre que les trois campagnes ne sont pas parfaitement cohérentes puisque l'on trouve des valeurs inférieures à 0,7.

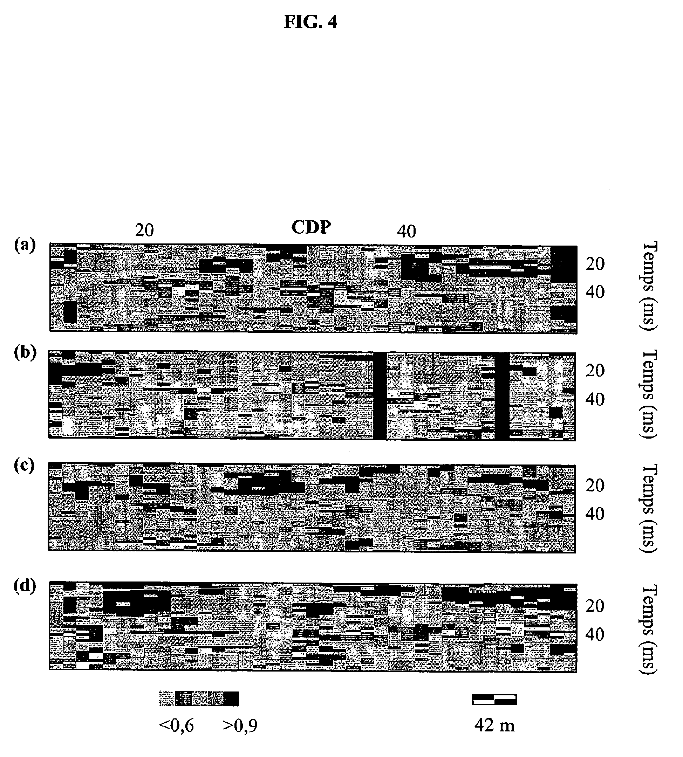

Les trois campagnes sismiques semblent relativement bien cohérentes sur les premières 22 ms avec une majorité de valeurs supérieures à 0,8 (figure 4). Au-delà, il existe, localement, davantage de zones présentant une faible valeur de cohérence, avec une majorité de valeurs comprises entre 0,7 et 0,8 et, localement, des valeurs inférieures à 0,7.

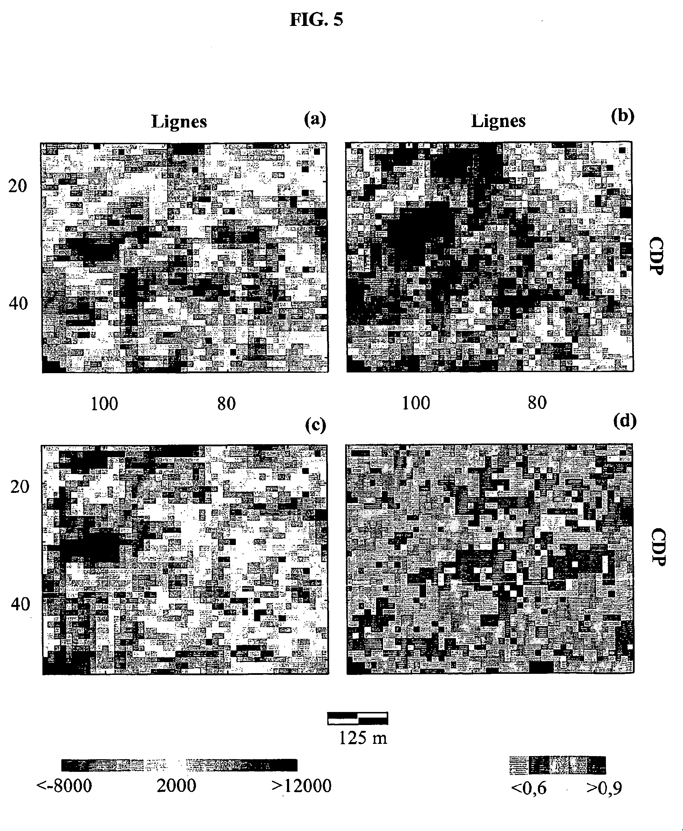

Ceci est illustré par la figure 5 qui montre le plan temporel, situé à +30ms en dessous du toit du cube, pour les trois campagnes sismiques ainsi que le cube de cohérence. Les valeurs inférieures à 0,8 sont majoritaires et se répartissent sur l'ensemble du plan temporel. Les sections sismiques des trois campagnes confirment bien ce manque de cohérence 4D.

Les cubes de cohérence selon les deux autres méthodes ont été également calculés à partir des mêmes cubes sismiques.

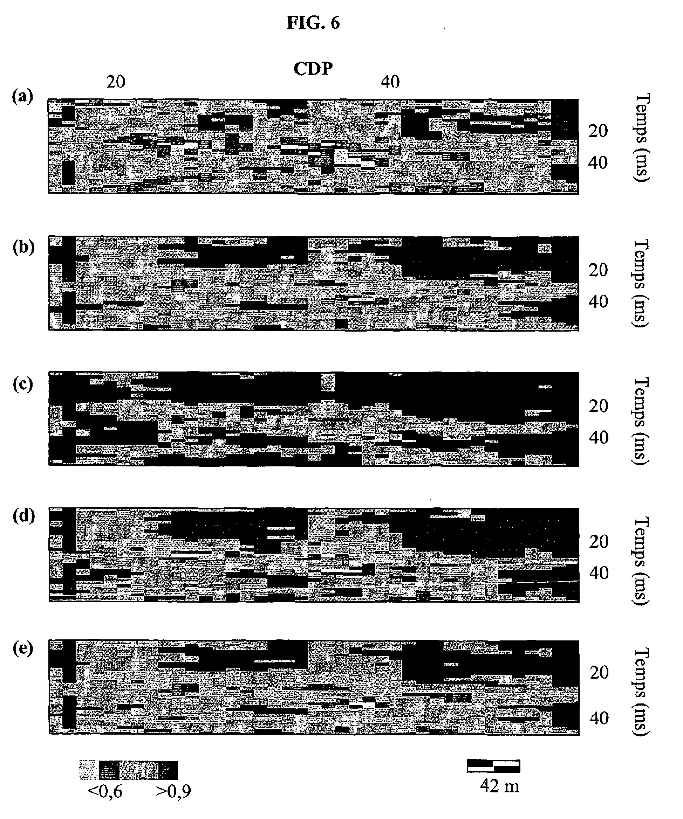

La figure 6 montre la ligne 10 extraite des cubes de cohérences calculés selon la première méthode avec un seuil fixé à 99% (a), selon la troisième méthode avec seuil à 99% (b), à 90% (c), selon la deuxième méthode avec la première variable synthétique (d), les deux premières variables synthétiques (e).

Toutes les sections obtenues sont globalement assez proches. La section (c) montre des valeurs de cohérence plus fortes que la section (b): la part de variance supplémentaire prise en compte semble donc correspondre à une part d'information locale moins commune, tirant ainsi vers le bas la cohérence.

Les valeurs de cohérence apparaissent un peu plus fortes lorsqu'elles sont pondérées par la variance, que lorsqu'une simple moyenne est calculée. La section (e) est similaire à la section (b) et la section (d) est similaire à la section (c) : il semble donc que, dans la majorité des cas, localement, deux variables synthétiques suffisent pour résumer la totalité de l'information.

La section (e) présente un peu plus de valeurs de faibles cohérences que la section (d). De même, les zones de très fortes cohérences (valeurs supérieure à 0,9) sont un peu moins étendues dans le second cas. En revanche, quelques rares zones voient leur cohérence légèrement augmenter. Globalement, les résultats obtenus ne sont pas fondamentalement différents, bien qu'en ajoutant la seconde variable synthétique dans le calcul de l'attribut de cohérence, davantage de variance soit prise en compte. L'ajout de la seconde variable synthétique confirme donc les ressemblances ou les dissemblances déjà constatées avec une seule variable synthétique attribut. En conclusion, pour cette analyse menée hors réservoir, une seule variable synthétique peut suffire pour calculer l'attribut de cohérence.

Les résultats ne sont pas détaillés ici, mais il a été vérifié qu'en diminuant le nombre de traces définissant le voisinage (9 au lieu de 25), les cubes de cohérence obtenus ont un aspect spatialement plus bruité. De même, il a été vérifié qu'en augmentant la dimension verticale des traces sismiques, le cube de cohérence obtenu était lissé verticalement : dans ce cas, les très faibles valeurs de cohérence constatées sur la figure 5 sont légèrement plus fortes. En prenant en compte deux ou trois variables synthétiques, ou en fixant un seuil de variance à 99%, il apparaît moins de zones présentant de faibles valeurs de cohérence.

Quelle que soit la méthode, il apparaît que les cubes situés en dehors du réservoir ne sont pas totalement cohérents : ceci peut être dû soit à un processus d'homogénéisation des amplitudes imparfait, soit à une certaine influence de l'exploitation du réservoir sur les amplitudes.

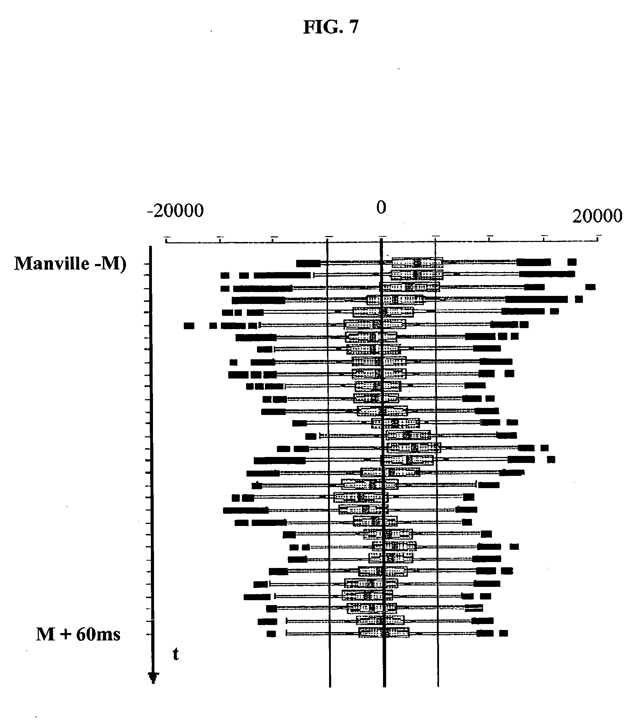

La figure 7 montre les distributions des différences d'amplitude entre deux campagnes successives à plusieurs années d'intervalle, au sein de la fenêtre temporelle étudiée. En cas de parfaite reproductibilité du signal, les valeurs médiane ou moyenne devraient être centrées sur 0, et les distributions devraient être peu étalées. Or, il apparaît nettement que cette hypothèse n'est exacte qu'entre 8 et 24 ms dans l'exemple considéré. Ailleurs, les distributions oscillent autour de 0, avec une valeur médiane maximum atteinte aux alentours de 30 ms. Cette mesure globale des différences d'amplitude confirme bien le résultat plus local obtenu avec l'attribut de cohérence.

**1-2 Dans le réservoir**

Un attribut de cohérence a ensuite été calculé au sein même du réservoir selon la première méthode. Le seuil de variance a été fixé à 99%. La dimension du voisinage du point courant pour le calcul de la cohérence est de 25 traces, de 4ms chacune. La zone réservoir correspond à une épaisseur de 20ms.

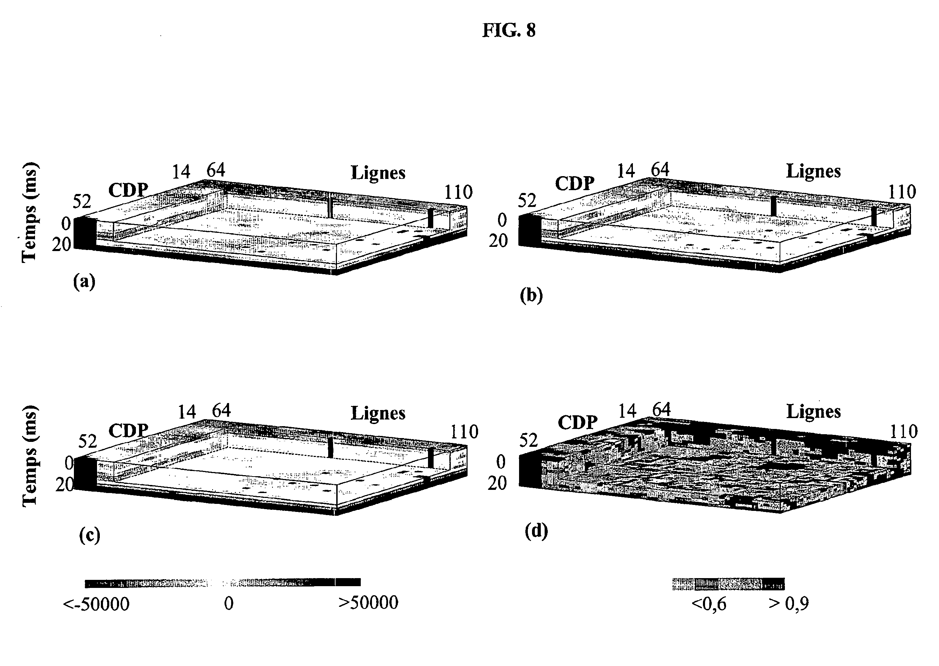

La figure 8 montre les trois campagnes sismiques, ainsi que le cube de cohérence associé. Les zones montrant les valeurs de cohérence les plus faibles semblent se situer à la base du réservoir, dans les deux tiers sud. La coïncidence entre la situation des puits permettant la production et les faibles valeurs de cohérence conforte l'interprétation en termes de variations 4D et non pas en termes simplement de bruits sismiques, comme cela pourrait être fait compte tenu de la non parfaite reproductibilité du signal démontrée précédemment avec l'attribut de cohérence sur la zone hors réservoir.

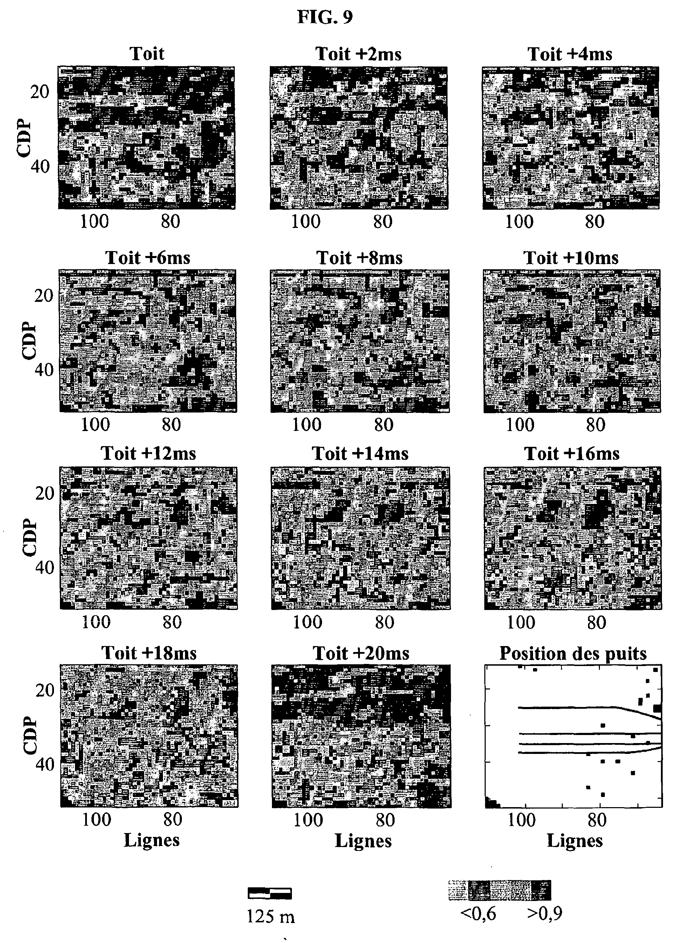

Ceci est confirmé avec la figure 9 rassemblant les onze plans temporels du cube de cohérence. Même s'il n'est pas totalement immuable, le tiers nord semble ne pas changer d'une campagne sismique à l'autre, avec des valeurs de cohérence supérieures à 0,8 en majorité, sur toute l'épaisseur du réservoir : il est à noter tout de même de légères variations entre les CDP 80 à 90 et les lignes 14 à 20 pour les plans situés 12ms à 16 ms sous le toit du réservoir. Le coin sud-est du réservoir reste aussi inchangé d'une campagne à l'autre. Ces zones n'apparaissent donc pas être trop influencées par l'exploitation du champ : elles peuvent être considérées comme une zone réservoir de moins bonne qualité en terme de porosité/perméabilité.

Les larges zones de très faibles valeurs de cohérence à la base coïncident avec la présence de trois des quatre puits d'injection de vapeur et de récupération de l'huile, ainsi qu'à la partie sud en dessous de ces puits, ce qui laisserait penser à une invasion de la vapeur injectée sur cette zone. De même, la zone de très faible cohérence au toit se situe à l'aplomb de l'extrémité des quatre puits : là aussi, cette zone peut correspondre à une remontée de vapeur en bout de puits.

En revanche, le puits situé le plus au nord coïncide avec une zone légèrement plus cohérente au-delà de la ligne 80. Ce puits est situé à la limite avec la zone considérée comme moins bon réservoir; la vapeur injectée pourrait davantage influencer la partie située plus au sud de ce puits.

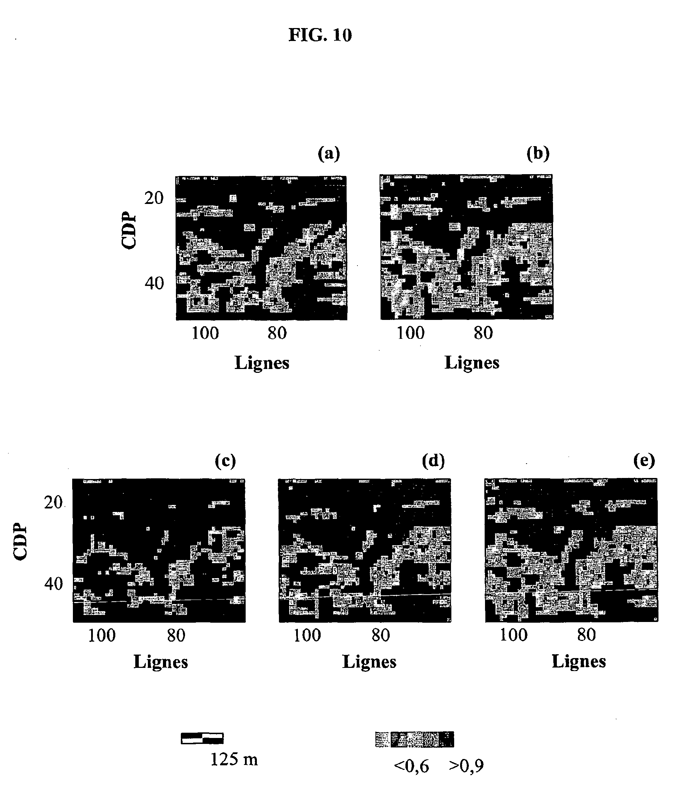

La figure 10 montre le plan temporel situé 12ms sous le toit du réservoir extrait des cubes de cohérence calculés selon les deux autres approches : pour la première méthode en prenant en compte une seule variable synthétique (a), deux variables synthétiques (b), pour la seconde méthode en fixant un seuil de variance à 90% (c), à 95% (d), et à 99% (e). Les deux cartes (a) et (b) sont très similaires entre elles, mais également très similaires respectivement aux cartes (d) et (e). L'ajout d'une seconde variable synthétique, comme pour le cas hors réservoir, ne semble pas changer l'interprétation qui pourrait être faite. Globalement, il semble que deux variables synthétiques suffisent à expliquer presque la totalité de la variance initiale de chacun des groupes d'attributs analysés. De même, la prise en compte de variance supplémentaire entre les cartes (d) et (e) ne change pas les cohérences obtenues, à l'exception de petits détails. En revanche, la carte (c) apparaît beaucoup plus cohérente que les deux autres cartes. La part de variance locale supplémentaire prise en compte correspond donc, dans la plupart des cas, à une information qui est moins commune aux trois cubes considérés. Les valeurs de cohérence obtenues dans ce cas sont plus fortes que les valeurs de cohérence obtenues en effectuant une moyenne simple (voir la carte correspondante sur la figure 9).

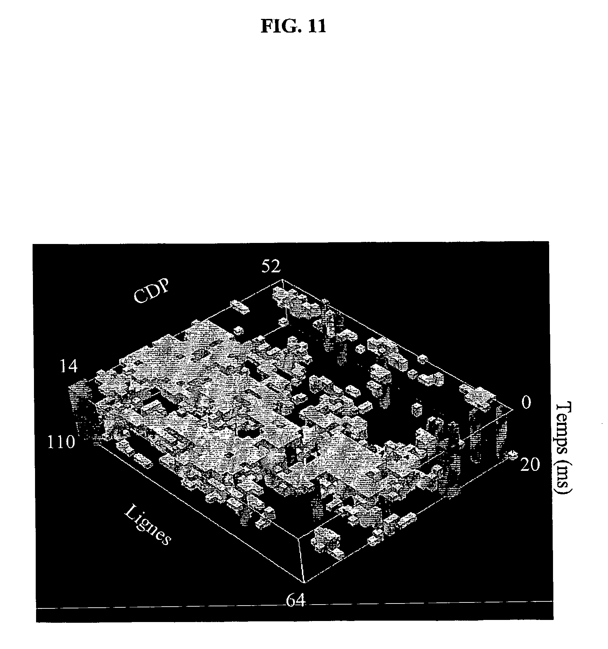

La figure 11 montre une vue 3D du cube de cohérence obtenu avec deux variables synthétiques et regroupant les valeurs de cohérence strictement inférieures à 0,8. Il apparaît nettement que le tiers au nord est inchangé, ainsi que le coin nord-est. De même, seuls les deux tiers au sud semblent changer.

**2 - Application à des données sismiques avant sommation**

La méthodologie peut également s'appliquer à la sismique avant sommation : dans ce cas, il s'agit de déterminer s'il existe des zones cohérentes dans les données AVO à partir de plusieurs cubes sismiques 3D iso-angles ou iso offsets.

Les données utilisées sont constituées des cinq cubes iso-angles couvrant un réservoir pétrolier (chenal avec des dépôts gréseux). L'épaisseur de la séquence étudiée est de 38ms.

La taille de chaque voisinage est de 5 lignes par 5 CDP, soit un total de 25 traces. La dimension verticale retenue est de 4 ms, soit trois échantillons temps. Le cube de cohérence a été calculé selon la première méthode (moyenne simple) avec un seuil de variance fixé à 99%.

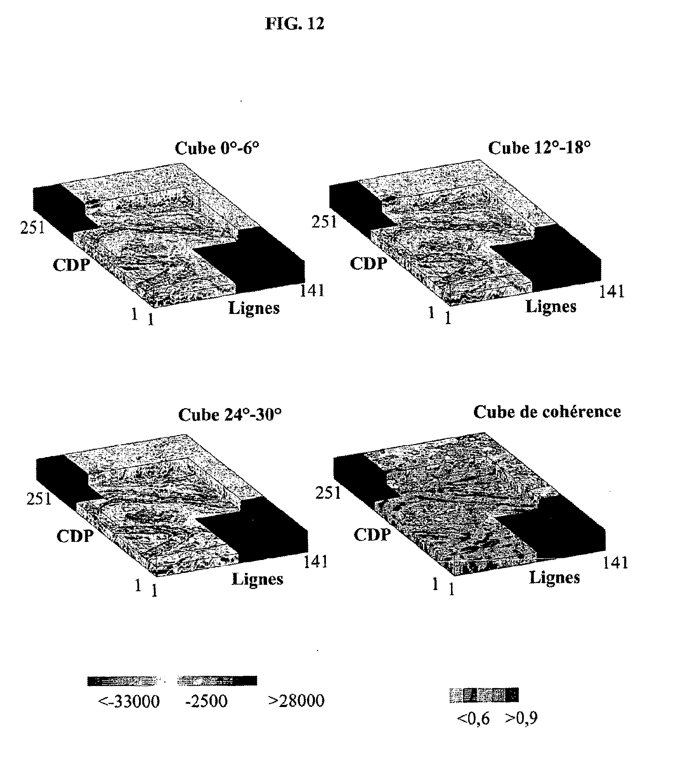

La figure 12 montre trois des cinq cubes iso-angles utilisés (cubes 0°-6°, 12°-18° et 24°-30°) ainsi que le cube de cohérence obtenu. Sur ce dernier cube, les zones les plus cohérentes apparaissent en orange et en rouge, et les zones les moins cohérentes en vert et en bleu. Les bordures d'une structure chenalisante y apparaissent nettement sous la forme de zones cohérentes.

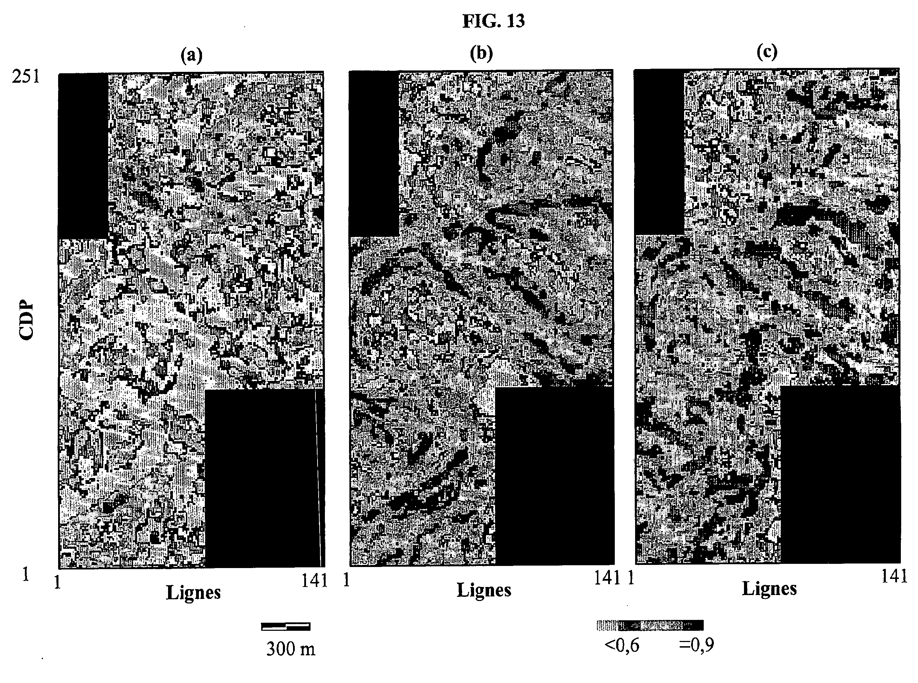

Globalement, les zones les moins cohérentes se situent essentiellement dans la partie haute de la fenêtre réservoir étudiée (figure 13, carte a), à l'exception d'une petite zone très cohérente au nord-ouest correspondant à une forte anomalie d'amplitude se retrouvant sur tous les cubes angles.

Dans la partie médiane (carte b), les zones les plus cohérentes suivent les contours de la forme chenalisante, le chenal en lui-même correspondant à des valeurs de cohérence inférieures à 0,8. Dans la partie basse de la fenêtre (carte c), les zones incohérentes sont moins nombreuses et sont essentiellement situées au nord-est et au sud-ouest.

Les zones les moins cohérentes semblent souligner des zones sismiquement plus sourdes ou des zones sismiques pour lesquelles les marqueurs ne se retrouvent pas d'un cube angle à l'autre.

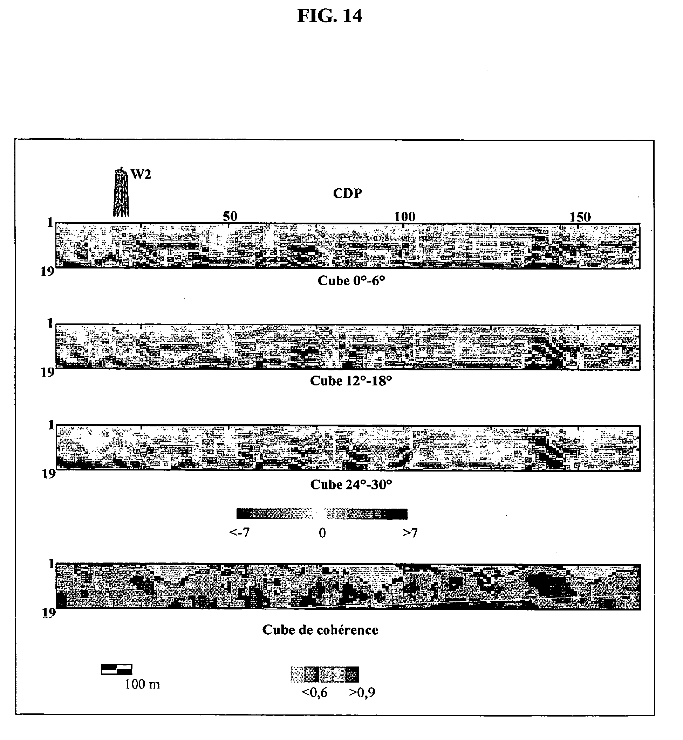

La figure 14 montre la ligne passant par un puits W2, extraite des cubes sismiques 0°-6°, 12°-18° et 24°-30°, ainsi que la même ligne extraite du cube de cohérence. Les zones correspondant aux chenaux sont relativement bien marquées par des faibles valeurs de cohérence dans leur partie haute, et des valeurs plus élevées dans leur partie basse. Les zones cohérentes correspondent bien à des marqueurs de forte amplitude se retrouvant sur les différents cubes angles.

Il a également été vérifié qu'en diminuant le nombre de traces pris en compte dans le voisinage, le cube de cohérence obtenu prenait un aspect plus bruité. De même, il a été vérifié qu'en augmentant la dimension verticale des traces sismiques du voisinage, le cube de cohérence obtenu était lissé verticalement.

L'attribut de cohérence AVO montre donc le degré de cohérence des cubes sismiques extraits dans le voisinage des points et considérés en fonction de l'angle. En conséquence, les zones incohérentes peuvent être interprétées soit comme du bruit sismique, soit comme des faciès lithologiques particuliers transparents du point de vue sismique (c'est-à-dire ne montrant pas de réflecteurs), ou comme de fortes variations de l'amplitude en fonction de l'angle (dues, par exemple, au contenu fluide). Il est donc intéressant de prendre en compte cet attribut de cohérence dans l'interprétation des réservoirs, en complément d'autres attributs.

## Revendications

1. Méthode pour mesurer les similarités locales entre un certain nombre p de cubes de traces sismiques obtenus par exploration sismique d'un même volume d'une zone souterraine, **caractérisée en ce qu'**elle comporte les étapes suivantes :

   a) on extrait, de chaque cube de traces sismiques, un voisinage volumique, centré sur un même point courant et composé d'un ensemble de traces sismiques en nombre limité ;
   b) on applique la technique d'analyse en composantes principales généralisées à des groupes d'attributs sismiques extraits des traces sismiques du dit voisinage volumique pour former des variables synthétiques ;
   c) on détermine une valeur de cohérence à partir des variables synthétiques, que l'on affecte au point courant ;
   d) on réitère les étapes a) à c) pour chacun des points communs aux différents cubes; et

   e) on regroupe l'ensemble des valeurs de cohérence pour former un cube de cohérence traduisant les dites similarités.

2. Méthode selon la revendication 1, **caractérisée en ce que**, pour chaque point, on prend comme valeur de cohérence, la valeur moyenne des carrés des corrélations entre un nombre limité k de variables synthétiques et leurs projections sur les cubes dans le voisinage du point courant.

3. Méthode selon la revendication 2, **caractérisée en ce que** l'on détermine la valeur du nombre k de variables synthétiques comme le plus petit nombre de variables synthétiques permettant d'atteindre un seuil de variance expliqué par les projections des variables synthétiques sur chacun des cubes, ce seuil étant préalablement choisi.

4. Méthode selon l'une des revendications précédentes, **caractérisée en ce que** l'on choisit un nombre k de variables synthétiques selon leurs corrélations avec les groupes d'attributs associés au voisinage volumique du point courant, la valeur de cohérence attribuée au point courant étant égale à la somme pondérée des carrés des corrélations entre les variables synthétiques considérées et leurs projections sur les cubes dans le voisinage du point courant.

5. Méthode selon la revendication 4, **caractérisée en ce que**, pour une valeur de corrélation définie, on choisit comme valeur de pondération, le pourcentage de variance expliqué par la projection de la variable synthétique sur le groupe correspondant divisé par la somme des variances de toutes les projections des variables synthétiques considérées sur le même groupe.

6. Méthode selon l'une des revendications précédentes, **caractérisée en ce que** l'on fixe un seuil sur le pourcentage de variance expliquée par les projections des variables synthétiques sur les cubes dans le voisinage du point courant qu'il faut prendre en compte, la valeur de cohérence étant alors égale à la somme pondérée des carrés des corrélations entre les variables synthétiques et leurs projections sur les cubes dans le voisinage du point courant, de sorte que le nombre de variables synthétiques pris en compte permette d'atteindre ce seuil.

7. Méthode selon la revendication 6, **caractérisée en ce que** pour une valeur de corrélation, on choisit comme valeur de pondération, p fois le seuil de variance fixé, p étant le nombre de cubes sismiques considérés.

8. Méthode selon l'une des revendications précédentes, **caractérisée en ce que** l'on extrait un voisinage volumique de cubes de traces sismiques obtenus à l'issue d'une campagne sismique 3D, chacun correspondant à un même angle d'incidence.

9. Méthode selon l'une des revendications 1 à 7, **caractérisée en ce que** l'on extrait un voisinage volumique de cubes de traces sismiques obtenus à l'issue d'une campagne sismique 3D, chacun correspondant à un même déport ou offset.

10. Méthode selon l'une des revendications 1 à 7, **caractérisée en ce que** l'on extrait un voisinage volumique de cubes de traces sismiques obtenus par des explorations sismiques successives de la zone.

11. Méthode selon l'une des revendications 1 à 7, **caractérisée en ce que** l'on extrait un voisinage volumique de cubes de résidus obtenus à l'issu d'une inversion stratigraphique avant sommation.

12. Méthode selon l'une des revendications 1 à 7, **caractérisée en ce que** l'on extrait un voisinage volumique de cube de résidus obtenus à l'issu d'une inversion stratigraphique après sommation.

13. Méthode selon l'une des revendications 1 à 7, **caractérisée en ce que** l'on extrait un voisinage volumique des cubes de traces inversés avant ou après sommation, et des cubes de résidus.

**Claims**

1. A method of measuring local similaritics between a certain number p of scismic trace cubes obtained by seismic exploration of a single volume of an underground zone, **characterized in that** it comprises the following stages :

   a) extracting, from each seismic trace cube, a volume neighbourhood centred on a single current point and consisting of a set of seismic traces in limited number,
   b) applying the generalized principal component analysis technique to groups of seismic attributes extracted from the seismic traces of said volume neighbourhood so as to form synthetic variables,
   c) determining a coherence value from the synthetic variables, which is assigned to the current point;
   d) repeating stages a) to c) for each point common to the various cubes, and
   e) grouping all of the coherence values so as to form a coherence cube showing said similarities.

2. A method as claimed in claim 1, **characterized in**

that, for each point, the coherence value taken is the mean value of the squares of the correlations between a limited number k of synthetic variables and their projections on the cubes in the neighbourhood of the current point.

3. A method as claimed in claim 2, **characterized in that** the value of the number k of synthetic variables is determined as the smallest number of synthetic variables allowing to reach a variance threshold explained by the projections of the synthetic variables on each cube, this threshold being previously selected.

4. A method as claimed in any one of the previous claims, **characterized in that** a number k of synthetic variables is selected depending on their correlations with the groups of attributes associated with the volume neighbourhood of the current point, the coherence value assigned to the current point being equal to the weighted sum of the squares of the correlations between the synthetic variables considered and their projections on the cubes in the neighbourhood of the current point.

5. A method as claimed in claim 4, **characterized in that**, for a determined correlation value, the weighting value selected is the variance percentage explained by the projection of the synthetic variable on the corresponding group divided by the sum of the variances of all the projections of the synthetic variables considered on the same group.

6. A method as claimed in any one of the previous claims, **characterized in that** a threshold is set on the variance percentage explained by the projections of the synthetic variables on the cubes in the neighbourhood of the current point to be taken into account, the coherence value being then equal to the weighted sum of the squares of the correlations between the synthetic variables and their projections on the cubes in the neighbourhood of the current point, so that the number of synthetic variables taken into account allows this threshold to be reached.

7. A method as claimed in claim 6, **characterized in that**, for a correlation value, the weighting value selected is p times the variance threshold selected, p being the number of seismic cubes considered.

8. A method as claimed in any one of the previous claims, **characterized in that** a volume neighbourhood is extracted from seismic trace cubes obtained after a 3D seismic survey, each one corresponding to the same incidence angle.

9. A method as claimed in any one of claims I to 7, **characterized in that** a volume neighbourhood is extracted from seismic trace cubes obtained after a 3D seismic survey, each one corresponding to the same offset.

**10.** A method as claimed in any one of claims 1 to 7, **characterized in that** a volume neighbourhood is extracted from seismic trace cubes obtained by successive seismic explorations of the zone.

**11.** A method as claimed in any one of claims 1 to 7, **characterized in that** a volume neighbourhood is extracted from residue cubes obtained after a prestack stratigraphic inversion.

**12.** A method as claimed in any one of claims I to 7, **characterized in that** a volume neighbourhood is extracted from residue cubes obtained after a poststack stratigraphic inversion.

**13.** A method as claimed in any one of claims 1 to 7, **characterized in that** a volume neighbourhood is extracted from prestack or poststack inverted trace cubes and from residue cubes.

**Patentansprüche**

**1.** Verfahren zur Messung lokaler Ähnlichkeiten zwischen einer bestimmten Zahl p von Kuben seismischer Spuren, die durch seismische Erkundung eines selben Volumens einer unterirdischen Zone erhalten wurden, **dadurch gekennzeichnet, dass** es die folgenden Schritte umfasst:

a) aus jedem Kubus seismischer Spuren wird eine Volumennachbarschaft extrahiert, die auf einem selben Verlaufspunkt zentriert ist und aus einer Gruppe seismischer Spuren mit begrenzter Zahl besteht;
b) die Technik der Analyse der allgemeinen Hauptkomponenten wird auf seismische Attributgruppen angewandt, die aus den seismischen Spuren dieser Volumennachbarschaft extrahiert wurden, um synthetische Variablen zu formen;
c) von den synthetischen Variablen ausgehend wird ein Kohärenzwert bestimmt, der dem Verlaufspunkt zugewiesen wird;
d) für jeden der Punkte, die den verschiedenen Kuben gemeinsam sind, werden die Schritte a) bis c) wiederholt;
e) die Gesamtheit der Koharenzwerte wird zusammengefasst, um einen Kohärenzkubus zu formen, der diese Ähnlichkeiten wiedergibt.

**2.** Verfahren nach Anspruch 1, **dadurch gekennzeichnet, dass** für jeden Punkt als Kohärenzwert der Mittelwert der Quadrate der Korrelationen zwischen einer begrenzten Zahl k von synthetischen Variablen und ihrer Projektionen auf die Kuben in der Nachbarschaft des Verlaufspunkts genommen wird.

**3.** Vorfahren nach Anspruch 2, **dadurch gekennzeichnet, dass** der Wert der Zahl k von synthetischen Variablen als die kleinste Zahl von synthetischen Variablen bestimmt wird, die es erlaubt, einen Varianzschwellenwert zu erreichen, die durch die Projektionen der synthetischen Variablen auf jeden der Kuben erklärt wird, wobei dieser Schwellenwert vorher gewählt wird.

**4.** Verfahren nach einem der vorherigen Ansprüche, **dadurch gekennzeichnet, dass** eine Zahl k von synthetischen Variablen ihren Korrelationen mit den Attributgruppen, die der Volumennachbarschaft des Verlaufspunkts zugeordnet sind, entsprechend gewählt wird, wobei der Kohärenzwert, der dem Verlaufspunkt zugewiesen wird, der gewichteten Summe der Quadrate der Korrelationen zwischen den berücksichtigten synthetischen Variablen und ihrer Projektionen auf die Kuben in der Nachbarschaft der Verlaufspunkte entspricht.

**5.** Verfahren nach Anspruch 4, **dadurch gekennzeichnet, dass** für einen definierten Kozrelationswert als Gewichtungswert der Varianzprozentsatz gewählt wird, der durch die Projektion der synthetischen Variablen auf die entsprechende Gruppe erklärt wird, dividiert durch die Summe der Varianzen aller Projektionen der berücksichtigten synthetischen Variablen auf dieselbe Gruppe.

**6.** Verfahren nach einem der vorherigen Ansprüche, **dadurch gekennzeichnet, dass** für den Varianzprozentsatz, die durch die Projektion der synthetischen Variablen auf Kuben in der Nachbarschaft des Verlaufspunkts erklärt wird, ein Schwellenwert festgelegt wird, der zu berücksichtigen ist, wobei der Kohärenzwert dann der gewichteten Summe der Quadrate der Korrelationen zwischen den synthetischen Variablen und ihren Projektionen auf die Kuben in der Nachbarschaft des Verlautspunkts entspricht, derart, dass die Zahl der berücksichtigen synthetischen Variablen es erlaubt, diesen Schwellenwert zu erreichen.

**7.** verfahren nach Anspruch 6, **dadurch gekennzeichnet, dass** für einen Korrelationswert als Gewichtungswert p mal der festgelegte Varianzschwellenwert gewählt wird, wobei p die Zahl der berücksichtigen seismischen Kuben ist.

**8.** Verfahren nach einem der vorherigen Ansprüche, **dadurch gekennzeichnet, dass** eine Volumennachbarschaft aus Kuben seismischer Spuren extrahiert wird, die durch eine seismische Kampagne in 3D erhalten wurden, wobei jede einem gleichen Einfallswinkel entspricht.

9. Verfahren nach einem der Ansprüche 1 bis 7, **dadurch gekennzeichnet, dass** eine Volumennachbarsnhaft aus Kuben seismischer Spuren extrahiert wird, die durch eine seismische Kampagne in 3D erhalten wurden, wobei jede einem gleichem Versatz oder Offset entspricht.

10. Verfahren nach einem der Ansprüche 1 bis 1, **dadurch gekennzeichnet, dass** eine Volumennachbarschaft aus Kuben seismischer Spuren extrahiert wird, die durch aufeinanderfolgende seismischen Erkundungen der Zone erhalten wurden.

11. Verfahren nach einem der Ansprüche 1 bis 7, **dadurch gekennzeichnet, dass** eine Volumennachbarschaft aus Kuben mit Spuren extrahiert wird, die vor der Aufsummierung durch eine stratigraphische Inversion erhalten wurden.

12. Verfahren nach einem der Ansprüche 1 bis 7, **dadurch gekennzeichnet, dass** eine Volumennachbarschaft aus Kuben mit Spuren extrahiert wird, die nach der Aufsummierung durch eine stratigraphische Inversion erhalten wurden.

13. Verfahren nach einem der Ansprüche 1 bis 7, **dadurch gekennzeichnet, dass** eine Volumennachbarschaft aus Kuben mit Spuren extrahiert wird, die vor oder nach der Aufsummierung invertiert wurden.

## FIG. 1

## FIG. 2

FIG. 3

(a)

(b)

(c)

(d)

<-35000    -3500    >28000

<0,6    >0,9

EP 1 452 889 B1

**FIG. 4**

## FIG. 5

# FIG. 7

**FIG. 6**

FIG. 8

EP 1 452 889 B1

## FIG. 9

**Toit**

**Toit +2ms**

**Toit +4ms**

**Toit +6ms**

**Toit +8ms**

**Toit +10ms**

**Toit +12ms**

**Toit +14ms**

**Toit +16ms**

**Toit +18ms**

**Toit +20ms**

**Position des puits**

Lignes

Lignes

Lignes

125 m

<0,6    >0,9

## FIG. 10

(a)  (b)

(c)  (d)  (e)

125 m

<0,6  >0,9

**FIG. 11**

FIG. 12

Cube 0°-6°

251

CDP

1 1

141

Lignes

Cube 12°-18°

251

CDP

1 1

141

Lignes

Cube 24°-30°

251

CDP

1 1

141

Lignes

Cube de cohérence

251

CDP

1 1

141

Lignes

<-33000    -2500    >28000

<0,6   >0,9

FIG. 13

(a)                          (b)                          (c)

251

CDP

1

1                    Lignes                    141 1                    Lignes                    141 1                    Lignes                    141

300 m

<0,6        =0,9

EP 1 452 889 B1

## FIG. 14

**EP 1 452 889 B1**